# EUROPEAN PATENT APPLICATION

(11) **EP 4 442 784 A1**
(43) Date of publication of application: **09.10.2024**
(21) Application number: 22901339.6
(22) Date of filing: 29.11.2022
(51) Int. Cl.: C09J 4/02, C09J 11/06

(54) **ANAEROBIC CURING-TYPE ADHESIVE COMPOSITION, BONDED LAMINATE, AND MOTOR**

(30) Priority: 30.11.2021 JP 2021194894
(71) Applicant: Toagosei Co., Ltd., Minato-ku Tokyo 105-8419 (JP); NIPPON STEEL CORPORATION, Chiyoda-ku Tokyo 100-8071 (JP)
(72) Inventor: IWASE, Yoshiaki, Nagoya-shi, Aichi 455-0026 (JP); ARAI, Mikako, Nagoya-shi, Aichi 455-0026 (JP); TAKEDA, Kazutoshi, Tokyo 100-8071 (JP); FUKUCHI, Minako, Tokyo 100-8071 (JP)
(74) Representative: Vossius & Partner Patentanwälte Rechtsanwälte mbB
(86) International application number: PCT/JP2022/044073
(87) International publication number: WO 2023/100907

(57) **Abstract**

An anaerobic curing adhesive composition of the disclosure contains a polymer or an oligomer having two or more (meth)acryloyl groups in one molecule, a polyfunctional ethylenically unsaturated compound other than the urethane (meth)acrylate, a radical polymerization initiator, and an anaerobic curing catalyst.

## Description

### Technical Field

The present invention relates to an anaerobic curing adhesive composition, a bonded laminated body, and a motor.

### Background Art

In recent years, in manufacturing of a motor core of a small-sized motor, a method of layering steel sheets with an adhesive has attracted attention. It is expected that the method of layering steel sheets with an adhesive reduces the distortion of the steel sheets and improves the energy efficiency as compared with the conventional method of fixing steel sheets by physical irregularities.

Examples of the conventional anaerobic curing adhesive composition include those described in Patent Literature 1.

Patent Literature 1 discloses an anaerobic curing adhesive containing a phosphoric acid ester compound.

Patent Literature 1: WO 2019/123885 A1

### SUMMARY OF INVENTION

### Technical Problem

As described above, Patent Literature 1 discloses an anaerobic curing adhesive containing a phosphoric acid ester compound. Patent Literature 1 proposes a method in which an organic solvent and an anaerobic curing accelerator are dissolved in punching oil and applied to a steel sheet, the punching oil is substantially evaporated in a drying step at room temperature, and then the anaerobic curing adhesive is cured at normal temperature.

Conventionally, since a high temperature is applied at the time of manufacturing or operating a motor core, adhesion strength at a high temperature is also required for an adhesive, that is, oily surface adhesiveness and adhesion strength at a high temperature are important.

An object of the invention is to provide an anaerobic curing adhesive composition excellent in oily surface adhesiveness and excellent in adhesion strength at a high temperature (150°C).

Another object of the invention is to provide a bonded laminated body and a motor using the anaerobic curing adhesive composition.

### Solution to Problem

Means for solving the above problems include the following aspects.
<1> An anaerobic curing adhesive composition containing: a polymer or an oligomer having two or more (meth)acryloyl groups in one molecule; a polyfunctional ethylenically unsaturated compound other than the urethane (meth)acrylate; a radical polymerization initiator; and an anaerobic curing catalyst.
<2> The anaerobic curing adhesive composition according to <1>, wherein a total content of the polymer and oligomer is from 30% by mass to 70% by mass with respect to a total mass of the adhesive composition.
<3> The anaerobic curing adhesive composition according to <1> or <2>, wherein a content of the polyfunctional ethylenically unsaturated compound other than the polymer or the oligomer is from 1% by mass to 20% by mass with respect to a total mass of the adhesive composition.
<4> The anaerobic curing adhesive composition according to any one of <1> to <3>, wherein the radical polymerization initiator is an organic peroxide.
<5> The anaerobic curing adhesive composition according to any one of <1> to <3>, further containing a compound having an aromatic ring and an ethylenically unsaturated group.
<6> The anaerobic curing adhesive composition according to <5>, wherein the compound having an aromatic ring and an ethylenically unsaturated group includes a compound having only one ethylenically unsaturated group.
<7> The anaerobic curing adhesive composition according to <5> or <6>, wherein the compound having an aromatic ring and an ethylenically unsaturated group includes a compound having an oxycarbonyl group having an ethylenically unsaturated group on an aromatic ring.
<8> The anaerobic curing adhesive composition according to any one of <5> to <7>, wherein the compound having an aromatic ring and an ethylenically unsaturated group includes a phthalic acid-modified compound having an ethylenically unsaturated group.
<9> The anaerobic curing adhesive composition according to <8>, wherein the phthalic acid-modified compound having an ethylenically unsaturated group includes mono(meth)acryloxy (poly)alkyleneoxyalkyl phthalate.
<10> The anaerobic curing adhesive composition according to any one of <1> to <9>, which is anaerobic curing adhesive composition for a steel sheet.
<11> A bonded laminated body obtained by bonding and layering two or more steel sheets with the anaerobic curing adhesive composition according to any one of <1> to <10>.
<12> A motor including the bonded laminated body according to <11>.

### Advantageous Effects of Invention

According to the invention, it is possible to provide an anaerobic curing adhesive composition excellent in oily surface adhesiveness and excellent in adhesion strength at a high temperature (150°C).

According to the invention, it is possible to provide a bonded laminated body and a motor using the anaerobic curing adhesive composition.

### BRIEF DESCRIPTION OF DRAWINGS

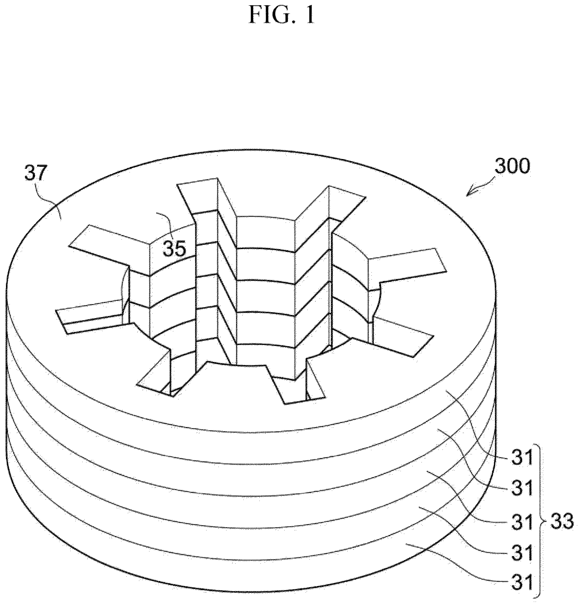

Fig. 1 is a perspective view illustrating an example of a bonded laminated body (motor core) according to the present embodiment.

### DESCRIPTION OF EMBODIMENTS

While the description of the constituents described below will occasionally be made based on representative embodiments of the present disclosure, the disclosure is not limited to such embodiments. In the present specification, "to" is used to mean that numerical values which are described before and after "to" are included as a lower limit value and an upper limit value, respectively.

In a numerical range described in a stepwise manner in this specification, an upper limit value or a lower limit value described in one numerical range may be replaced with an upper limit value or a lower limit value described in another numerical range described in a stepwise manner. In a numerical range described in this specification, an upper limit value or a lower limit value of the numerical range may be replaced with a value shown in Examples.

In the disclosure, "mass%" and "wt%" are synonymous, and "part(s) by mass" and "part(s) by weight" are synonymous.

In the disclosure, a combination of two or more preferred aspects is a more preferred aspect.

In the disclosure, "(meth)acrylate" refers to at least one of acrylate or methacrylate. "(Meth)acrylic acid" refers to at least one of acrylic acid or methacrylic acid. "(Meth)acryloyl group" refers to at least one of an acryloyl group or a methacryloyl group. "(Meth)acryloxy group" refers to at least one of an acryloxy group or a methacryloxy group. "(Meth)acrylamide group" refers to at least one of an acrylamide group or a methacrylamide group.

Hereinafter, contents of the disclosure will be described in detail.

### (Anaerobic Curing Adhesive Composition)

An anaerobic curing adhesive composition of the disclosure contains a polymer or an oligomer having two or more (meth)acryloyl groups in one molecule, a polyfunctional ethylenically unsaturated compound other than the polymer or the oligomer, a radical polymerization initiator, and an anaerobic curing catalyst.

The anaerobic curing adhesive composition of the disclosure can be suitably used as an anaerobic curing adhesive composition for a steel sheet.

Since the anaerobic curing adhesive composition of the disclosure contains a polymer or an oligomer having two or more (meth)acryloyl groups in one molecule and a polyfunctional ethylenically unsaturated compound other than the polymer or the oligomer, the anaerobic curing adhesive composition has curability at normal temperature (for example, from 10°C to 35°C) and in a short time without not affecting the adhesive performance even in the presence of an oil, although the detailed mechanism is not clear. Therefore, the anaerobic curing adhesive composition of the disclosure has excellent adhesiveness (oily surface adhesiveness) even on an adhesion surface to which the oil is attached. In the anaerobic curing adhesive composition of the disclosure, it is presumed that the polyfunctional ethylenically unsaturated compound forms a strong crosslinked structure, whereby the anaerobic curing adhesive composition is excellent in oily surface adhesiveness and can maintain adhesion strength even at a high temperature.

The anaerobic curing adhesive composition of the disclosure is excellent in adhesion strength at a high temperature, and thus can be suitably used for production of a bonded laminated body obtained by bonding and layering a steel sheet, a motor core, a motor, and the like.

### <Polymer or Oligomer Having Two or More (Meth)Acryloyl Groups in One Molecule>

The anaerobic curing adhesive composition of the disclosure contains a polymer or an oligomer having two or more (meth)acryloyl groups in one molecule.

In the present specification, the "oligomer" is a polymer having a weight average molecular weight of 500 or more but less than 5,000. The "polymer" is a polymer having a weight average molecular weight of 5,000 or more. The "molecular weight" in the disclosure means a value obtained by converting a weight average molecular weight measured by gel permeation chromatography (GPC) using polystyrene as a standard substance. The weight average molecular weight can be determined, for example, by performing GPC measurement under the following conditions.

The weight average molecular weight is determined by performing separation by gel permeation chromatograph (HLC-8320GPC manufactured by Tosoh Corporation, hereinafter, abbreviated as "GPC") at 40°C in a tetrahydrofuran solvent using a GPC column "TSK gel SuperMultiporeHZ-M" (manufactured by Tosoh Corporation) and calculating the weight average molecular weight in terms of standard polystyrene from the retention time.

The position of the (meth)acryloyl group contained in the polymer or the oligomer having two or more (meth)acryloyl groups in one molecule is preferably a terminal, but the (meth)acryloyl group may be contained in a monomer unit constituting the main chain of the polymer or the oligomer.

The polymer or the oligomer having two or more (meth)acryloyl groups in one molecule is not particularly limited, but is preferably at least one compound selected from the group consisting of urethane (meth)acrylate, epoxy (meth)acrylate, ester (meth)acrylate, isoprene-based (meth)acrylate, hydrogenated isoprene-based (meth)acrylate, and a (meth)acrylic group-containing acrylic polymer, more preferably urethane (meth)acrylate or epoxy (meth)acrylate, and particularly preferably urethane (meth)acrylate, from the viewpoint of oily surface adhesiveness.

Examples of the urethane (meth)acrylate include a reaction product of a polyhydric alcohol, a polyvalent isocyanate, and a hydroxy (meth)acrylate compound, and a reaction product of a polyvalent isocyanate and a hydroxy (meth)acrylate compound without using a polyhydric alcohol.

Specific examples of the polyhydric alcohol include polyether polyols (polypropylene glycol, polytetramethylene glycol, and the like), polyester polyols obtained by reaction of a polyhydric alcohol and a polybasic acid, caprolactone polyols obtained by reaction of a polyhydric alcohol, a polybasic acid, and ε-caprolactone, and polycarbonate polyols (for example, polycarbonate polyol obtained by reaction of 1,6-hexanediol and diphenyl carbonate, and the like).

Specific examples of the polyvalent isocyanate include alicyclic polyvalent isocyanates (isophorone diisocyanate, dicyclopentanyl diisocyanate, and the like), aliphatic polyvalent isocyanates (hexamethylene diisocyanate, trimethylhexamethylene diisocyanate, and the like), and aromatic polyvalent isocyanates (tolylene diisocyanate, xylylene diisocyanate, diphenylmethane-4,4'-diisocyanate, and the like).

As the urethane (meth)acrylate, those produced from a polyether polyol, a polyester polyol, or a polycarbonate polyol as a raw material polyol are preferable from the viewpoint of excellent suppression of deterioration over time and excellent adhesion force. As the raw material organic polyisocyanate, those produced from isophorone diisocyanate, hexamethylene diisocyanate, and xylene diisocyanate are preferable from the viewpoint of excellent suppression of deterioration over time.

Examples of the urethane (meth)acrylate include urethane (meth)acrylate having a polybutadiene skeleton, urethane (meth)acrylate having a hydrogenated polybutadiene skeleton, urethane (meth)acrylate having a polycarbonate skeleton, urethane (meth)acrylate having a hydrogenated bisphenol A skeleton, urethane (meth)acrylate having a polyether skeleton, urethane (meth)acrylate having a polyester skeleton, and urethane (meth)acrylate having a castor oil skeleton.

Examples of the epoxy (meth)acrylate include (meth)acrylates obtained by reacting an epoxy resin (for example, conventionally known aromatic epoxy resin, alicyclic epoxy resin, aliphatic epoxy resin, and the like) with (meth)acrylic acid.

The polymer or the oligomer having two or more (meth)acryloyl groups in one molecule preferably includes a compound in which the maximum value of tanδ observed in dynamic viscoelasticity measurement (1 Hz, 2°C/min.) is observed at 25°C or lower, from the viewpoint of oily surface adhesiveness.

The polymer or the oligomer having two or more (meth)acryloyl groups in one molecule preferably includes a compound in which the viscosity at 25°C as measured with an E-type viscometer is 500 mPa·s or more, from the viewpoint of oily surface adhesiveness.

In a case in which the anaerobic curing adhesive composition of the disclosure contains two or more kinds of polymers or oligomers having two or more (meth)acryloyl groups in one molecule, the polymer or the oligomer having two or more (meth)acryloyl groups in one molecule preferably has the following aspects.

The polymer or the oligomer having two or more (meth)acryloyl groups in one molecule preferably includes a compound in which the maximum value of tanδ observed in dynamic viscoelasticity measurement (1 Hz, 2°C/min.) is observed at 25°C or lower and a compound in which the maximum value of tanδ observed in dynamic viscoelasticity measurement (1 Hz, 2°C/min.) is observed at higher than 25°C, from the viewpoint of oily surface adhesiveness.

The polymer or the oligomer having two or more (meth)acryloyl groups in one molecule preferably includes a compound in which the maximum value of tanδ observed in dynamic viscoelasticity measurement (1 Hz, 2°C/min.) is observed at 25°C or lower and a compound having the maximum value of tanδ higher than the maximum value of tanδ of the foregoing compound by 30°C or more, from the viewpoint of oily surface adhesiveness.

The polymer or the oligomer having two or more (meth)acryloyl groups in one molecule preferably includes two or more kinds of compounds in which the viscosity at 25°C as measured with an E-type viscometer is 1,000 mPa·s or more, from the viewpoint of oily surface adhesiveness.

The maximum value of tanδ can be measured by the following procedure using, for example, the following dynamic viscoelasticity measurement apparatus. The tanδ is calculated from a ratio of a storage elastic modulus and a loss elastic modulus detected during the measurement, and for example, an adhesive cured product sample cut into 50 mm × 20 mm and a thickness of 1 mm is attached to a measuring instrument, cooled to -60°C, and isothermally held for 5 minutes, and then the maximum value of tanδ is checked under the condition that the temperature is raised to 250°C at 2°C/min while the sample is periodically pulled at a frequency of 1 Hz.
Measuring instrument: DMS6100 manufactured by Seiko Instruments Inc.
Measurement atmosphere: nitrogen

The anaerobic curing adhesive composition of the disclosure may contain one kind of the polymer or the oligomer having two or more (meth)acryloyl groups in one molecule singly, or two or more kinds thereof.

The total content of the polymer or the oligomer having two or more (meth)acryloyl groups in one molecule is preferably from 5% by mass to 90% by mass, more preferably from 10% by mass to 70% by mass, and particularly preferably from 15% by mass to 60% by mass, with respect to the total mass of the adhesive composition, from the viewpoint of oily surface adhesiveness.

### <Polyfunctional Ethylenically Unsaturated Compound>

The anaerobic curing adhesive composition of the disclosure contains a polyfunctional ethylenically unsaturated compound.

The "polyfunctional ethylenically unsaturated compound" in the disclosure refers to a polyfunctional ethylenically unsaturated compound other than the polymer and the oligomer unless otherwise specified.

The polyfunctional ethylenic compound may be a compound having two or more ethylenically unsaturated groups, and preferably includes a polyfunctional (meth)acrylate compound from the viewpoint of curability.

The number of functional groups in the polyfunctional ethylenic compound is not particularly limited. From the viewpoint of adhesion strength at a high temperature, the polyfunctional ethylenic compound preferably includes a 2- to 20-functional ethylenically unsaturated compound, more preferably includes a 3- to 12-functional ethylenically unsaturated compound, still more preferably includes a 4- to 10-functional ethylenically unsaturated compound, and particularly preferably includes a 5- to 8-functional ethylenically unsaturated compound.

The polyfunctional ethylenically unsaturated compound is not particularly limited, and examples thereof include 1,3-butylene glycol di(meth)acrylate, 1,4-butylene glycol di(meth)acrylate, neopentyl glycol di(meth)acrylate, 1,6-hexane glycol di(meth)acrylate, ethylene glycol di(meth)acrylate, polyethylene glycol di(meth)acrylate, propylene glycol di(meth)acrylate, tripropylene glycol di(meth)acrylate, ethylene oxide-modified neopentyl glycol di(meth)acrylate, propylene oxide-modified neopentyl glycol di(meth)acrylate, hydroxypivaline acid ester neopentyl glycol diacrylate, caprolactone-modified hydroxypivaline acid ester neopentyl glycol diacrylate, neopentyl glycol-modified trimethylolpropane di(meth)acrylate, stearic acid-modified pentaerythritol di(meth)acrylate, dicyclopentenyl di(meth)acrylate, ethylene oxide-modified dicyclopentenyl di(meth)acrylate, di(meth)acryloyl isocyanurate, dimethyloltricyclodecane di(meth)acrylate, trimethylolpropane tri(meth)acrylate, pentaerythritol tri(meth)acrylate, ethylene oxide-modified trimethylolpropane tri(meth)acrylate, propylene oxide-modified trimethylolpropane tri(meth)acrylate, epichlorohydrin-modified trimethylolpropane tri(meth)acrylate, epichlorohydrin-modified glycerol tri(meth)acrylate, tris(acryloyloxyethyl)isocyanurate, ditrimethylolpropane tetra(meth)acrylate, pentaerythritol tetra(meth)acrylate, dipentaerythritol monohydroxy penta(meth)acrylate, alkyl-modified dipentaerythritol pentaacrylate, dipentaerythritol hexa(meth)acrylate, and caprolactone-modified dipentaerythritol hexa(meth)acrylate.

Among them, from the viewpoint of heat resistance, adhesiveness to the steel sheet, and adhesion strength at a high temperature, the polyfunctional ethylenically unsaturated compound preferably includes at least one compound selected from the group consisting of dipentaerythritol penta(meth)acrylate and dipentaerythritol hexa(meth)acrylate.

The anaerobic curing adhesive composition of the disclosure may include one kind of the polyfunctional ethylenically unsaturated compound singly, or two or more kinds thereof.

The content of the polyfunctional ethylenically unsaturated compound is preferably from 0.1% by mass to 60% by mass, more preferably from 0.5% by mass to 50% by mass, and particularly preferably from 1% by mass to 40% by mass, with respect to the total mass of the adhesive composition, from the viewpoint of adhesion strength at a high temperature. In one embodiment, the content of the polyfunctional ethylenically unsaturated compound is preferably 5% by mass or more with respect to the total mass of the adhesive composition.

### <Radical Polymerization Initiator>

The anaerobic curing adhesive composition of the disclosure contains a radical polymerization initiator.

Examples of the radical polymerization initiator include an organic peroxide and a photoradical generator, and an organic peroxide is preferable from the viewpoint of anaerobic curability.

Examples of the organic peroxide include hydroperoxides, ketone peroxides, diallyl peroxides, and peroxyesters. Among them, hydroperoxides are preferably used from the viewpoint of storage stability. Examples of the hydroperoxides include cumene hydroperoxide, t-butyl hydroperoxide, p-methane hydroperoxide, methyl ethyl ketone peroxide, cyclohexane peroxide, dicumyl peroxide, and diisopropylbenzene hydroperoxide.

As the organic peroxide, from the viewpoint of excellent anaerobic curability, an organic peroxide having a one-hour half-life temperature in a range of from 80°C to 300°C is preferable, and an organic peroxide having a one-hour half-life temperature in a range of from 100°C to 200°C is more preferable. The one-hour half-life temperature is a value measured by thermal decomposition under the condition that the concentration of peroxide is 0.1 mol/L in benzene.

Examples of the organic peroxide having a one-hour half-life temperature in a range of from 80°C to 300°C include hydroperoxides. Specific examples of the hydroperoxides include p-menthane hydroperoxide, diisopropylbenzene hydroperoxide, 1,1,3,3-tetramethylbutyl hydroperoxide, cumene hydroperoxide, and t-butyl hydroperoxide.

The photoradical generator is not particularly limited, and examples thereof include an acetophenone-based photoradical polymerization initiator, a benzoin-based photoradical polymerization initiator, a benzophenone-based photoradical polymerization initiator, a thioxanthone-based photoradical polymerization initiator, an acylphosphine oxide-based photoradical polymerization initiator, and a titanocene-based photoradical polymerization initiator.

Examples of the acetophenone-based photoradical polymerization initiator include diethoxyacetophenone, 2-hydroxy-2-methyl-1-phenyl-propan-1-one, benzyl dimethyl ketal, 4-(2-hydroxyethoxy)phenyl(2-hydroxy-2-propyl)ketone, 1-hydroxycyclohexyl phenyl ketone, 2-methyl-2-morpholino(4-thiomethylphenyl)propan-1-one, 2-benzyl-2-dimethylamino-1-(4-morpholinophenyl)butanone, and 2-hydroxy-2-methyl-1-[4-(1-methylvinyl)phenyl]propanone oligomer.

Examples of commercially available products of the acetophenone-based photoradical polymerization initiator include IRGACURE 184, IRGACUR 1173, IRGACURE 2959, and IRGACURE 127 (manufactured by BASF), and ESACUREKIP-150 (manufactured by Lamberti s.p.a.).

Examples of the acylphosphine oxide-based photoradical polymerization initiator include bis(2,4,6-trimethylbenzoyl)phenylphosphine oxide and 2,4,6-trimethylbenzoyldiphenylphosphine oxide.

Examples of commercially available products of the acylphosphine oxide-based photoradical polymerization initiator include Omnirad TPO and Omnirad 819 (manufactured by IGM Resins B.V.), and IRGACURE 819DW (manufactured by BASF).

The anaerobic curing adhesive composition of the disclosure may include one kind of the radical polymerization initiator singly, or two or more kinds thereof.

The content of the radical polymerization initiator is preferably from 0.05% by mass to 20% by mass, more preferably from 0.1% by mass to 10% by mass, and particularly preferably from 0.5% by mass to 5% by mass, with respect to the total mass of the adhesive composition, from the viewpoint of anaerobic curability and adhesion strength at a high temperature.

### <Anaerobic Curing Catalyst>

The anaerobic curing adhesive composition of the disclosure contains an anaerobic curing catalyst.

Examples of the anaerobic curing catalyst include saccharin, an amine compound, an azole compound, a mercaptan compound, a hydrazine compound, and salts thereof.

Among them, a combination of saccharin and a hydrazine compound or a salt thereof is preferable from the viewpoint of anaerobic curability.

Examples of the amine compound include a heterocyclic secondary amine (for example, 1,2,3,4-tetrahydroquinoline, 1,2,3,4-tetrahydroquinaldine, and the like), a heterocyclic tertiary amine (for example, quinoline, methylquinoline, quinaldine, quinoxaline phenazine, and the like), and an aromatic tertiary amine (for example, N,N-dimethyl-anisidine, N,N-dimethylaniline, N,N'-dimethyl-p-toluidine, and the like).

Examples of the azole compound include 1,2,4-triazole, oxazole, oxadiazole, thiadiazole, benzotriazole, hydroxybenzotriazole, benzoxazole, 1,2,3-benzothiadiazole, and 3-mercaptobenzotriazole.

Examples of the mercaptan compound include linear mercaptans such as n-dodecyl mercaptan, ethyl mercaptan, and butyl mercaptan.

Examples of the hydrazine compound include 1-acetyl-2-phenylhydrazine, 1-acetyl-2(p-tolyl)hydrazine, 1-benzoyl-2-phenylhydrazine, 1-(1',1',1'-trifluoro)acetyl-2-phenylhydrazine, 1,5-diphenyl-carbohydrazine, 1-formyl-2-phenylhydrazine, 1-acetyl-2-(p-bromophenyl)hydrazine, 1-acetyl-2-(p-nitrophenyl)hydrazine, 1-acetyl-2-(2'-phenylethylhydrazine), p-nitrophenylhydrazine, and p-trisulfonylhydrazide.

Examples of the salt of the hydrazine compound include 4-methylsulfonylphenylhydrazine hydrochloride, hydrazine monohydrochloride, and p-tolylhydrazine hydrochloride.

The anaerobic curing adhesive composition of the disclosure may include one kind of the anaerobic curing catalyst singly, or two or more kinds thereof.

The content of the anaerobic curing catalyst is preferably from 0.05% by mass to 30% by mass, more preferably from 0.1% by mass to 20% by mass, and particularly preferably from 0.2% by mass to 10% by mass, with respect to the total mass of the adhesive composition, from the viewpoint of anaerobic curability and adhesion strength at a high temperature.

### <Compound Having Aromatic Ring and Ethylenically Unsaturated Group>

The anaerobic curing adhesive composition of the disclosure preferably further contains a compound having an aromatic ring and an ethylenically unsaturated group.

The compound having an aromatic ring and an ethylenically unsaturated group is preferably a compound having a molecular weight of less than 1,000, and more preferably a compound having a molecular weight of less than 500.

The aromatic ring in the compound having an aromatic ring and an ethylenically unsaturated group is not particularly limited, but is preferably an aromatic hydrocarbon ring, more preferably a benzene ring or a naphthalene ring, and particularly preferably a benzene ring, from the viewpoint of oily surface adhesiveness.

The ethylenically unsaturated group in the compound having an aromatic ring and an ethylenically unsaturated group is not particularly limited, but is preferably at least one group selected from the group consisting of a (meth)acryloxy group, a (meth)acrylamide group, a styryl group, an allyl group, a vinyl ether group, and a vinyl ester group, and more preferably a (meth)acryloxy group, from the viewpoint of curability and oily surface adhesiveness.

Examples of the compound having an aromatic ring and an ethylenically unsaturated group include styrene and a derivative thereof, benzyl (meth)acrylate, a (meth)acrylate compound of an aromatic carboxylic acid, and a (meth)acrylate compound of a (poly)alkylene glycol-modified aromatic carboxylic acid.

The number of ethylenically unsaturated groups in the compound having an aromatic ring and an ethylenically unsaturated group is not particularly limited, but is preferably from 1 to 6, more preferably from 1 to 3, and still more preferably 1 or 2, from the viewpoint of oily surface adhesiveness.

The compound having an aromatic ring and an ethylenically unsaturated group more preferably includes a compound having only one ethylenically unsaturated group from the viewpoint of oily surface adhesiveness.

The compound having an aromatic ring and an ethylenically unsaturated group preferably includes a compound having an ester bond and more preferably includes a compound having an oxycarbonyl group having an ethylenically unsaturated group on an aromatic ring, from the viewpoint of oily surface adhesiveness.

The compound having an aromatic ring and an ethylenically unsaturated group preferably includes a phthalic acid-modified compound having an ethylenically unsaturated group from the viewpoint of oily surface adhesiveness.

The phthalic acid-modified compound having an ethylenically unsaturated group may be a compound having one or more ethylenically unsaturated groups and a phthalic acid structure (1,2-bis(carbonyloxy)benzene structure).

The group having an ethylenically unsaturated group in the phthalic acid-modified compound having an ethylenically unsaturated group may be bonded to one or two of two carbonyloxy groups in the phthalic acid structure, or may be bonded on a benzene ring of the phthalic acid structure.

The phthalic acid-modified compound having an ethylenically unsaturated group preferably includes a phthalic acid-modified compound having only one ethylenically unsaturated group and more preferably includes mono(meth)acryloxy (poly)alkyleneoxyalkyl phthalate, from the viewpoint of oily surface adhesiveness.

The phthalic acid-modified compound having an ethylenically unsaturated group preferably includes a compound represented by the following Formula (1) from the viewpoint of oily surface adhesiveness.

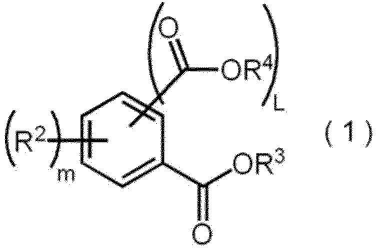

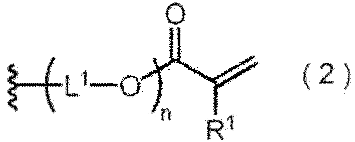

In Formulas (1) and (2), L¹ each independently represents a hydrocarbon group having from 1 to 10 carbon atoms (for example, an aliphatic hydrocarbon group such as an ethylene group or a 1,2-propylene group). R¹ each independently represents a hydrogen atom or a methyl group. R² each independently represents an alkyl group, an aryl group, a halogen atom, a hydroxy group, an alkoxy group, an aryloxy group, an amino group, an alkylamino group, an arylamino group, a dialkylamino group, a diarylamino group, an alkylarylamino group, an acyl group, or an acyloxy group. R³ represents a group represented by Formula (2). R⁴ represents a hydrogen atom, an alkyl group, an aryl group, or a group represented by Formula (2). L represents 0 or 1. m represents an integer from 0 to 4. n represents an integer from 1 to 100.

The 1,2-propylene group of L¹ in Formula (2) may be -CH(CH₃)CH₂- or - CH₂CH(CH₃)-.

L¹ in Formula (2) is preferably an ethylene group from the viewpoint of oily surface adhesiveness.

R¹ in Formula (2) is preferably a hydrogen atom from the viewpoint of curability and oily surface adhesiveness.

R² in Formula (1) is preferably an alkyl group, an aryl group, a halogen atom, a hydroxy group, an alkoxy group, or an aryloxy group, and more preferably an alkyl group, an aryl group, an alkoxy group, or an aryloxy group. The number of carbon atoms of the alkyl group and the alkoxy group is preferably from 1 to 10 and more preferably from 1 to 5.

The bonding position of R² and -COOR⁴ in Formula (1) is any position on a benzene ring. In particular, the bonding position of -COOR⁴ is preferably an ortho position of the bonding position of -COOR³ from the viewpoint of oily surface adhesiveness.

R⁴ in Formula (1) is preferably a hydrogen atom, an alkyl group, or a group represented by Formula (2), and more preferably a hydrogen atom or a group represented by Formula (2). The number of carbon atoms of the alkyl group is preferably from 1 to 10 and more preferably from 1 to 5.

L in Formula (1) is preferably 1 from the viewpoint of oily surface adhesiveness.

m in Formula (1) is preferably an integer from 0 to 3, more preferably 0 or 1, and particularly preferably 0.

n in Formula (2) is preferably an integer from 1 to 50, more preferably an integer from 1 to 20, still more preferably an integer from 1 to 10, and particularly preferably 1, from the viewpoint of oily surface adhesiveness.

Specific examples of the compound having an aromatic ring and an ethylenically unsaturated group include, but are not limited to, the following compounds.

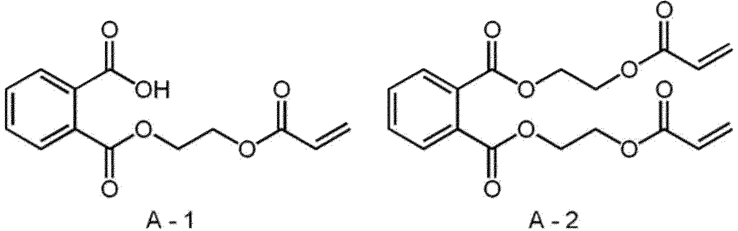

The anaerobic curing adhesive composition of the disclosure may include one kind of the compound having an aromatic ring and an ethylenically unsaturated group singly, or two or more kinds thereof.

The content of the compound having an aromatic ring and an ethylenically unsaturated group is preferably from 0.01% by mass to 10% by mass, more preferably from 0.05% by mass to 5% by mass, particularly preferably from 0.1% by mass to 2% by mass, with respect to the total mass of the adhesive composition, from the viewpoint of oily surface adhesiveness.

### <Monofunctional Ethylenically Unsaturated Compound>

The anaerobic curing adhesive composition of the disclosure preferably contains a monofunctional ethylenically unsaturated compound from the viewpoint of anaerobic curability.

The monofunctional ethylenically unsaturated compound may be a compound having only one ethylenically unsaturated group.

Examples of the monofunctional ethylenically unsaturated compound include lauryl (meth)acrylate, stearyl (meth)acrylate, tetrahydrofurfuryl (meth)acrylate, caprolactone-modified tetrahydrofurfuryl (meth)acrylate, cyclohexyl (meth)acrylate, dicyclopentanyl (meth)acrylate, isobornyl (meth)acrylate, benzyl (meth)acrylate, phenyl (meth)acrylate, phenoxyethyl (meth)acrylate, phenoxydiethylene glycol (meth)acrylate, phenoxytetraethylene glycol (meth)acrylate, nonylphenoxyethyl (meth)acrylate, nonylphenoxytetraethylene glycol (meth)acrylate, methoxydiethylene glycol (meth)acrylate, ethoxydiethylene glycol (meth)acrylate, butoxyethyl (meth)acrylate, butoxytriethylene glycol (meth)acrylate, 2-ethylhexyl (meth)acrylate, 2-ethylhexylpolyethylene glycol (meth)acrylate, nonylphenylpolypropylene glycol (meth)acrylate, methoxydipropylene glycol (meth)acrylate, glycidyl (meth)acrylate, 2-hydroxyethyl (meth)acrylate, 2-hydroxypropyl (meth)acrylate, 2-hydroxybutyl (meth)acrylate, glycerol (meth)acrylate, polyethylene glycol (meth)acrylate, polypropylene glycol (meth)acrylate, modified butyl (meth)acrylate, epichlorohydrin-modified phenoxy (meth)acrylate, ethylene oxide-modified phthalic acid (meth)acrylate, ethylene oxide-modified succinic acid (meth)acrylate, caprolactone-modified 2-hydroxyethyl (meth)acrylate, N,N-dimethylaminoethyl (meth)acrylate, N,N-diethylaminoethyl (meth)acrylate, morpholino (meth)acrylate, N-phenylmaleimide, N-(4-hydroxyphenyl)maleimide, N-(4-acetylphenyl)maleimide, N-(4-methoxyphenyl)maleimide, N-(4-ethoxyphenyl)maleimide, N-(4-chlorophenyl)maleimide, N-(4-bromophenyl)maleimide, and N-benzylmaleimide.

Among them, from the viewpoint of heat resistance and adhesiveness to the steel sheet, the monofunctional ethylenically unsaturated compound preferably includes at least one compound selected from the group consisting of dipentaerythritol penta(meth)acrylate and dipentaerythritol hexa(meth)acrylate, and more preferably includes at least two compounds selected from the group consisting of dipentaerythritol penta(meth)acrylate and dipentaerythritol hexa(meth)acrylate.

Among them, from the viewpoint of adhesion force to the steel sheet, the monofunctional ethylenically unsaturated compound preferably includes at least one compound selected from the group consisting of 2-hydroxyethyl (meth)acrylate, isobornyl (meth)acrylate, morpholino (meth)acrylate, N-phenylmaleimide, and tetrahydrofurfuryl (meth)acrylate, and more preferably includes at least two compounds selected from the group consisting of 2-hydroxyethyl (meth)acrylate, isobornyl (meth)acrylate, morpholino (meth)acrylate, N-phenylmaleimide, and tetrahydrofurfuryl (meth)acrylate.

The monofunctional ethylenically unsaturated compound preferably includes a monofunctional ethylenically unsaturated compound having a hydroxy group and more preferably includes a monofunctional (meth)acrylate compound having a hydroxy group, from the viewpoint of adhesion strength at a high temperature and adhesion force to the steel sheet.

Preferred examples of the monofunctional ethylenically unsaturated compound having a hydroxy group include those having a hydroxy group among the monofunctional ethylenically unsaturated compounds described above.

The anaerobic curing adhesive composition of the disclosure may include one kind of the monofunctional ethylenically unsaturated compound having a hydroxy group singly, or two or more kinds thereof.

The content of the monofunctional ethylenically unsaturated compound having a hydroxy group is preferably from 5% by mass to 75% by mass, more preferably from 10% by mass to 70% by mass, still more preferably from 20% by mass to 65% by mass, and particularly preferably from 30% by mass to 60% by mass, with respect to the total mass of the adhesive composition, from the viewpoint of anaerobic curability and adhesion strength at a high temperature.

The monofunctional ethylenically unsaturated compound preferably includes a monofunctional ethylenically unsaturated compound having a carboxy group or an acid anhydride structure.

Preferred examples of the monofunctional ethylenically unsaturated compound having a carboxy group include unsaturated carboxylic acids.

Examples of the unsaturated carboxylic acids include (meth)acrylic acid, maleic acid, fumaric acid, itaconic acid, crotonic acid, citraconic acid, cinnamic acid, and monoalkyl esters of unsaturated dicarboxylic acid. Examples of the unsaturated dicarboxylic acid include maleic acid, fumaric acid, itaconic acid, and citraconic acid.

Preferred examples of the monofunctional ethylenically unsaturated compound having an acid anhydride group include unsaturated carboxylic anhydrides.

Examples of the unsaturated carboxylic anhydrides include maleic anhydride, itaconic anhydride, and citraconic anhydride.

Among them, (meth)acrylic acid is preferable from the viewpoint of heat resistance and adhesiveness to the steel sheet.

The anaerobic curing adhesive composition of the disclosure may include one kind of the monofunctional ethylenically unsaturated compound having a carboxy group or an acid anhydride structure singly, or two or more kinds thereof.

The content of the monofunctional ethylenically unsaturated compound having a carboxy group or an acid anhydride structure is preferably from 0.01% by mass to 10% by mass, more preferably from 0.05% by mass to 5% by mass, and particularly preferably from 0.1% by mass to 2% by mass, with respect to the total mass of the adhesive composition, from the viewpoint of anaerobic curability and adhesion strength at a high temperature.

The anaerobic curing adhesive composition of the disclosure may include one kind of the monofunctional ethylenically unsaturated compound singly, or two or more kinds thereof, but preferably includes two or more kinds thereof and more preferably includes three or more kinds thereof from the viewpoint of adhesion strength at a high temperature.

The content of the monofunctional ethylenically unsaturated compound is preferably from 5% by mass to 90% by mass, more preferably from 10% by mass to 80% by mass, and particularly preferably from 15% by mass to 80% by mass, with respect to the total mass of the adhesive composition, from the viewpoint of adhesion strength at a high temperature.

### <Acid and/or Acid Anhydride>

The anaerobic curing adhesive composition of the disclosure may contain an acid and/or an acid anhydride having no ethylenically unsaturated group.

The acid or acid anhydride is not particularly limited, and known acids or acid anhydrides can be used. The acid or acid anhydride is preferably an organic acid of organic acid anhydride, and is preferably a carboxylic acid or carboxylic acid anhydride.

Preferred examples of the acid or acid anhydride include pyromellitic acid and trimellitic anhydride.

The anaerobic curing adhesive composition of the disclosure may include one kind of the acid or acid anhydride singly, or two or more kinds thereof, and the acid and the acid anhydride may be used in combination.

The content of the acid and the acid anhydride is preferably from 0.01% by mass to 10% by mass and more preferably from 0.05% by mass to 5% by mass, with respect to the total mass of the adhesive composition, from the viewpoint of anaerobic curability and oily surface adhesiveness.

### <Other Components>

The anaerobic curing adhesive composition of the disclosure may contain adhesives as components other than those described above as long as the objects of the disclosure are not impaired. Examples of the additives include a filler, various elastomers, a storage stabilizer, an antioxidant, a light stabilizer, a heavy metal deactivator, a silane coupling agent, a tackifier, a plasticizer, an antifoaming agent, a pigment, a rust inhibitor, a leveling agent, a dispersant, a rheology modifier, and a flame retardant.

For the purpose of improving the elastic modulus, fluidity, and the like of a cured product, the anaerobic curing adhesive composition of the disclosure may contain a filler to such an extent that the storage stability is not inhibited. Specific examples thereof include an organic powder and an inorganic powder.

The filler of the inorganic powder is not particularly limited, and examples thereof include glass, fumed silica, alumina, mica, ceramics, silicone rubber powder, calcium carbonate, aluminum nitride, carbon powder, kaolin clay, dry clay mineral, and dry diatomaceous earth.

The content of the inorganic powder is preferably from 0.1 parts by mass to 100 parts by mass with respect to 100 parts by mass of the total content of a polymer or an oligomer having a (meth)acryloyl group at the terminal, the polyfunctional ethylenically unsaturated compound, the compound having an aromatic ring and an ethylenically unsaturated group, and the other ethylenically unsaturated compound (hereinafter, also referred to as "polymerization components").

The fumed silica is blended for the purpose of adjusting the viscosity of a radically polymerizable adhesive composition for an adhesive laminated steel sheet or improving the mechanical strength of a cured product. Preferably, surface-treated fumed silica or the like is used. Examples of the material for the surface treatment include dimethylsilane, trimethylsilane, alkylsilane, methacryloxysilane, organochlorosilane, polydimethylsiloxane, and hexamethyldisilazane.

Examples of commercially available products of the fumed silica include AEROSIL (registered trademark) R972, R972V, R972CF, R974, R976, R976S, R9200, RX50, NAX50,NX90, RX200, RX300, R812, R812S, R8200, RY50, NY50, RY200S, RY200, RY300, R104, R106, R202, R805, R816, T805, R711, RM50, and R7200 (all products manufactured by Nippon Aerosil Co., Ltd.).

The filler of the organic powder is not particularly limited, and examples thereof include polyethylene, polypropylene, nylon (registered trademark), crosslinked acryl, crosslinked polystyrene, polyester, polyvinyl alcohol, polyvinyl butyral, and polycarbonate.

The content of the organic powder is preferably from 0.1 parts by mass to 100 part by mass with respect to 100 parts by mass of the polymerization components.

The anaerobic curing adhesive composition of the disclosure may contain a storage stabilizer.

As the storage stabilizer, a radical absorber, a metal chelating agent, and the like can also be added. Examples of the radical absorber include benzoquinone, hydroquinone, hydroquinone monomethyl ether. Examples of the metal chelating agent include a radical absorber, ethylenediaminetetraacetic acid or a disodium salt thereof, oxalic acid, acetylacetone, and o-aminophenol.

Among them, the anaerobic curing adhesive composition of the disclosure preferably contains a radical absorber and a metal chelating agent, and more preferably contains at least one selected from the group consisting of hydroquinone and hydroquinone monomethyl ether, and at least one selected from the group consisting of ethylenediaminetetraacetic acid and ethylenediaminetetraacetic acid disodium salt, from the viewpoint of storage stability.

The content of the storage stabilizer is preferably from 0.0001 parts by mass to 1 part by mass with respect to 100 parts by mass of the polymerization components.

The anaerobic curing adhesive composition of the disclosure may contain an antioxidant.

Examples of the antioxidant include quinone-based compounds such as β-naphthoquinone, 2-methoxy-1,4-naphthoquinone, methylhydroquinone, hydroquinone, hydroquinone monomethyl ether, mono-tert-butyl hydroquinone, 2,5-di-tert-butyl hydroquinone, p-benzoquinone, 2,5-diphenyl-p-benzoquinone, and 2,5-di-tert-butyl-p-benzoquinone; phenols such as phenothiazine, 2,2-methylene-bis(4-methyl-6-tert-butylphenol), catechol, tert-butylcatechol, 2-butyl-4-hydroxyanisole, 2,6-di-tert-butyl-p-cresol, 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate, 4,4'-butylidenebis(6-tert-butyl-3-methylphenol), 4,4'-thiobis(6-tert-butyl-3-methylphenol), 3,9-bis[2-[3-(3-tert-butyl-4-hydroxy-5-methylphenyl)propionyloxy]-1,1-dimethylethyl]-2,4,8,10-tetraoxaspiro[5,5]undecane, pentaerythritol tetrakis[3-(3,5-di-tert-butyl-4-hydroxyphenyl)propionate], thiodiethylene bis[3-(3,5-di-tert-butyl-4-hydroxyphenyl)propionate], octadecyl-3-(3,5-di-tert-butyl-4-hydroxyphenyl)propionate, N,N'-hexane-1,6-diylbis[3-(3,5-di-tert-butyl-4-hydroxyphenyl)propionamide], benzenepropanoic acid, 3,5-bis(1,1-dimethylethyl)-4-hydroxy C7-C9 side chain alkyl esters, 2,4-dimethyl-6-(1-methylpentadecyl)phenol, diethyl[[3,5-bis(1,1-dimethylethyl)-4-hydroxyphenyl]methyl]phosphonate, 3,3',3",5,5',5"-hexa-tert-butyl-a,a',a"-(mesitylene-2,4,6-tolyl)tri-p-cresol, calcium diethylbis[[3,5-bis(1,1-dimethylethyl)-4-hydroxyphenyl]methyl]phosphonate, 4,6-bis(octylthiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate, 1,3,5-tris(3,5-di-tert-butyl-4-hydroxybenzyl)-1,3,5-triazine-2,4,6(1H,3H,SH)-trione, 1,3,5-tris[(4-tert-butyl-3-hydroxy-2,6-xylyl)methyl]-1,3,5-triazine-2,4,6(1H,3H,5H)-trione, a reaction product of N-phenylbenzeneamine and 2,4,6-trimethylpentene, 2,6-di-tert-butyl-4-(4,6-bis(octylthio)-1,3,5-triazine-2-ylamino)phenol, picric acid, and citric acid; phosphorus-based compounds such as tris(2,4-di-tert-butylphenyl)phosphite, tris[2-[[2,4,8,10-tetra-tert-butyldibenzo[d,fl[1,3,2]dioxaphosphephine-6-yl]oxy]ethyl]amine, bis(2,4-di-tert-butylphenyl)pentaerythritol diphosphite, phosphorous acid bis[2,4-bis(1,1-dimethylethyl)-6-methylphenyl]ethyl ester, tetrakis(2,4-di-tert-butylphenyl)[1,1-bisphenyl]-4,4'-diylbisphosphonite, and 6-[3-(3-tert-butyl-4-hydroxy-5-methylphenyl)propoxy]-2,4,8,10-tetra-tert-butyldibenz[d, f][1,3,2]dioxaphosphephine; sulfur-based compounds such as dilauryl 3,3'-thiodipropionate, dimyristyl 3,3'-thiodipropionate, distearyl 3,3'-thiodipropionate, pentaerythrityl tetrakis(3-laurylthiopropionate), and 2-mercaptobenzimidazole; amine-based compounds such as phenothiazine; lactone-based compounds; and vitamin E-based compounds. Among them, a phenolic compound is preferable.

The anaerobic curing adhesive composition of the disclosure may contain a silane coupling agent.

Examples of the silane coupling agent is not particularly limited, and examples thereof include γ-chloropropyltrimethoxysilane, octenyltrimethoxysilane, glycidoxyoctyltrimethoxysilane, β-(3,4-epoxycyclohexyl)ethyltrimethoxysilane, γ-glycidoxypropyltrimethoxysilane, γ-ureidopropyltriethoxysilane, p-styryltrimethoxysilane, and 3-(meth)acryloxypropyltrimethoxysilane.

The content of the silane coupling agent (adhesion imparting agent) is preferably from 0.05 parts by mass to 30 parts by mass and more preferably from 0.2 parts by mass to 10 parts by mass, with respect to 100 parts by mass of the polymerization components, from the viewpoint of adhesiveness to the steel sheet.

A method of producing the anaerobic curing adhesive composition of the disclosure is not particularly limited, and the anaerobic curing adhesive composition can be produced by a known method. For example, the anaerobic curing adhesive composition can be produced by blending a predetermined amount of each component and mixing the components using a mixing means such as a mixer at a temperature of preferably from 10°C to 100°C for preferably from 0.1 hours to 5 hours.

The viscosity of the anaerobic curing adhesive composition of the disclosure at 25°C is preferably 10,000 mPa·s or less, more preferably from 10 mPa·s to 8,000 mPa·s, still more preferably from 25 mPa·s to 5,000 mPa·s, and particularly preferably from 50 mPa·s to 3,000 mPa·s, from the viewpoint of ease of spreading of the adhesive composition applied to the steel sheet and the viewpoint that the adhesive composition does not extremely protrude from the bonding surface in a case in which the steel sheets are bonded.

A method of measuring the viscosity of the anaerobic curing adhesive composition of the disclosure is as follows.

A specified amount of the adhesive composition is collected and discharged into a measuring cup. The viscosity is measured at a shear rate of 76.6 (1/s) under an environment of 25°C using an EHD type viscometer (manufactured by Toki Sangyo Co., Ltd.).

### (Bonded Laminated Body)

A bonded laminated body of the disclosure is a bonded laminated body obtained by bonding and layering two or more steel sheets with the anaerobic curing adhesive composition of the disclosure.

The steel sheet is not particularly limited, and preferred examples thereof include an electromagnetic steel sheet and a cold-rolled steel sheet.

The electromagnetic steel sheet may be an oriented electromagnetic steel sheet or a non-oriented electromagnetic steel sheet. In the case of using the bonded laminated body of the disclosure for a motor core, a rotor, a stator, and the like described below, the electromagnetic steel sheet is preferably a non-oriented electromagnetic steel sheet.

The shape, particularly the planar-direction shape, of the steel sheet is not particularly limited, and the shape can be appropriately selected if desired.

The thickness of the steel sheet is also not particularly limited, and can be appropriately selected according to the use application.

For example, the thickness of the steel sheet in the case of using the bonded laminated body of the disclosure for a motor is preferably from 0.10 mm to 0.35 mm and more preferably from 0.15 mm to 0.30 mm, because the need for further thinning of the bonded laminated body increases with the miniaturization of a motor. The thickness of the adhesive layer in the case of using the bonded laminated body of the disclosure for a motor is also preferably from 0.1 µm to 1,000 µm and more preferably from 0.5 µm to 500 µm from the same need.

The number of steel sheets used in the bonded laminate of the disclosure is not particularly limited, and can be appropriately selected according to the use mode of a motor or the like.

In a non-oriented electromagnetic steel sheet used in the disclosure, an average magnetic flux density B₅₀ in the entire circumferential direction in the case of being excited with a magnetization force of 5000 A/m is preferably 1.50 (T) or more and more preferably 1.60 (T) or more).

Here, the "average magnetic flux density B₅₀ in the entire circumferential direction of the non-oriented electromagnetic steel sheet" is an average value of the magnetic flux densities B₅₀ in the rolling direction (0°) and five directions of 22.5°, 45°, 67.5°, and 90° with respect to the rolling direction.

The chemical composition of the base steel sheet (base material of the steel sheet) contains a basic element, contains an optional element if necessary, and contains Fe and impurities as the balance. The chemical composition of the base steel sheet contains, for example, the following elements. Hereinafter, unless otherwise specified, "%" means "% by mass".

### [Basic Elements]

The chemical composition of the base steel sheet contains Si, Al, and Mn as basic elements. Hereinafter, these elements will be described.

### Si: from 2.5 to 4.5%

Silicon (Si) increases electrical resistance of steel and reduces eddy current loss. As a result, iron loss of the steel sheet decreases. Si increases the strength of steel. In a case in which the content of Si is 2.5% or more, iron loss of the steel sheet can be further reduced. In a case in which the content of Si is 4.5% or less, the workability of steel is more excellent. Therefore, the content of Si is preferably from 2.5 to 4.5%. The lower limit of the content of Si is more preferably 2.6% and still more preferably 2.7%. The upper limit of the content of Si is more preferably 4.3% and still more preferably 4.2%.

### Al: from 0.1 to 1.5%

Aluminum (Al) increases electrical resistance of steel and reduces eddy current loss. As a result, iron loss of the steel sheet decreases. In a case in which the content of Al is 0.1% or more, iron loss of the steel sheet can be further reduced. In a case in which the content of Al is 1.5% or less, the occurrence of a decrease in saturation magnetic flux density is suppressed. Therefore, the content of Al is preferably from 0.1 to 1.5%. The lower limit of the content of Al is more preferably 0.15% and still more preferably 0.2%. The upper limit of the content of Al is more preferably 1.4% and still more preferably 1.3%.

### Mn: from 0.2 to 4.0%

Manganese (Mn) increases electrical resistance of steel and reduces eddy current loss. As a result, iron loss of the steel sheet decreases. Mn suppresses formation of {111}<112> textures, which are not preferable for magnetic properties. In a case in which the content of Mn is 0.2% or more, iron loss of the steel sheet can be further reduced, and the formation of the {111}<112> textures can be further suppressed. In a case in which the content of Mn is 4.0% or less, the change in the textures is suppressed, and the degradation of the hysteresis loss is suppressed. Therefore, the content of Mn is preferably from 0.2 to 4.0%. The lower limit of the content of Mn is more preferably 0.3% and still more preferably 0.4%. The upper limit of the content of Mn is more preferably 3.8% and still more preferably 3.6%.

In the disclosure, the chemical composition of the base steel sheet may contain impurities. Here, the "impurities" include elements mixed in from ore or scraps as raw materials, and elements mixed in from a production environment, and the like in a case in which the base steel sheet is industrially produced. Examples of the impurities include elements such as C, P, S, and N.

The chemical composition of a base steel sheet 10 can be measured by a well-known chemical analysis method. For example, the chemical composition of the base steel sheet 10 may be measured using Inductively Coupled Plasma-Atomic Emission Spectrometry (ICP-AES).

The use application of the bonded laminated body of the disclosure is not particularly limited, and the bonded laminated body can be used for various use applications.

Among them, the bonded laminated body of the disclosure is suitably used for a motor core of a motor, or the like. Each of a plurality of electromagnetic steel sheets constituting a motor core is electrically insulated by a cured product of the anaerobic curing adhesive composition of the disclosure. Therefore, the motor core using the bonded laminated body of the disclosure has a small current loss, high performance, and high reliability, and distributes stress on the surface, so that stress concentration and strain concentration do not occur. As a result, the bonded laminated body of the disclosure is suitably used for a motor core of a motor, or the like.

A method of producing the bonded laminated body of the disclosure is not particularly limited, and preferably includes a step of applying a primer composition containing a solvent and an organometallic complex to a steel sheet, a step of applying an oil to the steel sheet to which the primer composition has been applied, a step of applying the anaerobic curing adhesive composition of the disclosure to the steel sheet to which the oil has been applied, and a step of bonding another steel sheet to the steel sheet to which the adhesive composition has been applied.

The primer composition used in the disclosure is not particularly limited, and examples thereof include a composition obtained by diluting an organometallic complex with a solvent. Examples of the organometallic complex include copper ethylhexanoate, pentadione iron, pentadione cobalt, pentadione copper, propylenediamine copper, ethylenediamine copper, iron naphthate, nickel naphthate, cobalt naphthate, copper naphthate, copper octate, iron hexoate, iron propionate, and vanadium acetylacetonate. Examples of the solvent include ethanol, toluene, acetone, and heptone.

Examples of the oil include punching oil.

The "punching oil" is an oil used to prevent galling and burning. The component of the punching oil is not particularly limited, but examples thereof include those containing a mineral oil or a synthetic oil as a main component, and a rust inhibitor, an antiseptic agent, or the like may be added as an optional component.

After the step of bonding the other steel sheet, heating can be performed in order to cure the adhesive composition in a shorter time.

The heating method is not particularly limited, and examples thereof include a thermostatic bath and a far infrared heater.

The heating temperature and the heating time at the time of heating may be any conditions as long as the adhesive composition can be sufficiently cured. The heating temperature is preferably from 40°C to 300°C and more preferably from 60°C to 150°C. The heating time is preferably from 10 seconds to 3 hours and more preferably from 20 seconds to 60 minutes. From the viewpoint of preventing occurrence of positional displacement of the bonded laminated body, it is preferable that the bonded laminated body is fixed in advance with a fixing jig or the like in the case of being placed in a thermostatic layer.

A method of applying the primer composition, the oil, and the adhesive composition is not particularly limited, but known methods can be used. Examples of the coating means include a roller, spraying, spraying, inkjet, and dipping.

For the steel sheet to be bonded, the primer composition and the oil may be applied to a surface to be bonded. For the steel sheet to be bonded, the adhesive composition may be applied to a surface to be bonded.

In the method of producing the bonded laminated body of the disclosure, a laminate obtained in the step of bonding the other steel sheet is used as a steel sheet in the step of applying a primer composition to a steel sheet. As a result, a bonded laminated body in which three or more steel sheets and an adhesive layer formed by curing the anaerobic curing adhesive composition of the disclosure are layered can be obtained.

In order to form the bonded laminated body of the disclosure into a desired shape, punching press working may be performed by a press molding apparatus or the like after the bonded laminated body is obtained. The steel sheet before bonding may be subjected to punching press working, or may be subjected to punching press working during the bonding step.

The steel sheet to be used in the step of applying a primer composition to a steel sheet may be subjected to punching press working.

In the case of using the bonded laminated body of the disclosure as a motor core, the bonded laminated body of the disclosure may be in the form in which electromagnetic steel sheets are layered. Specifically, the bonded laminated body of the disclosure may be a motor core obtained by punching an electromagnetic steel sheet to produce a blank member (steel sheet blank), and integrally layering the blank member. For example, as an example of the bonded laminated body of the disclosure, a motor core illustrated in Fig. 1 is mentioned.

Fig. 1 is a perspective view illustrating an example of a bonded laminated body (motor core) according to the present embodiment. As illustrated in Fig. 1, a bonded laminated body (motor core) 300 is formed as a laminated part 33 obtained by layering and integrating a plurality of blank members 31 of electromagnetic steel sheets with the anaerobic curing adhesive composition (not illustrated) of the disclosure interposed therebetween. In the blank member 31, a yoke part 37 is formed on the outer peripheral side, and tooth parts 35 protruding radially inward from the inner peripheral surface of the yoke part 37 are formed.

Although the motor core illustrated in Fig. 1 has been described above, the bonded laminated body according to the present embodiment is not limited thereto.

Next, a method of manufacturing a motor core will be described.

The method of manufacturing a motor core is not particularly limited, and the motor core may be manufactured by a manufacturing method usually employed industrially.

Hereinafter, an example of a preferred method of manufacturing a motor core will be described.

An example of a preferred method of manufacturing a motor core includes a punching step of subjecting an electromagnetic steel sheet to punching working to obtain a blank member and a layering step of layering the blank member.

### -Punching Step-

First, an electromagnetic steel sheet is punched into a predetermined shape according to a purpose, and a predetermined number of blank members are produced according to the number of laminated sheets. A method of producing a blank member by punching an electromagnetic steel sheet is not particularly limited, and any conventionally known method may be employed.

In a case in which the blank member is punched into a predetermined shape, a swaged portion for layering and fixing the blank member may be formed.

### -Layering Step-

A motor core can be obtained by layering and fixing the blank member prepared in the punching step.

As a method of fixing the laminated blank members, at least the anaerobic curing adhesive composition of the disclosure may be used, and for example, the anaerobic curing adhesive composition of the disclosure is applied to the blank members to form an adhesive layer, and the blank members are fixed with the adhesive layer interposed therebetween. A method of applying swaging to mechanically fit and fix the swaged portions formed on the respective blank members may be combined with a method of fixing the laminated blank members.

Since the metal surface of the blank member comes into contact with the swaged portion, insulation properties between the members may be deteriorated. However, in combination with the bonding by the anaerobic curing adhesive composition of the disclosure, it is possible to reduce the number of swaged portions or remove the portion to be bonded from an important place on a magnetic circuit. As a result, loss of the motor core can be reduced.

The motor core can be obtained through the above steps. The motor core is produced using the anaerobic curing adhesive composition of the disclosure excellent in oily surface adhesiveness. Therefore, since the cured product of the adhesive composition has high insulation properties, the current loss of the motor core is small. Since stress is dispersed on the surface and stress concentration and strain concentration do not occur, the motor core has high performance and excellent reliability.

### (Motor)

A motor of the disclosure includes the bonded laminated body of the disclosure.

A motor using the bonded laminated body of the disclosure for a motor core is suitably used for vibration of a mobile phone, focus adjustment of a camera, driving of a hard disk, driving of an automobile, and the like. The motor of the disclosure has a small current loss and is excellent in efficiency.

### Examples

Hereinafter, the disclosure will be described specifically based on Examples. The disclosure is not limited to these Examples. Hereinafter, "part(s)" and "%" mean "part(s) by mass" and "% by mass", respectively, unless otherwise specified.

### <Preparation of Base Compositions 1 to 3>

Each component described in Table 1 was mixed with a mixer at normal temperature (25°C) for 60 minutes so as to have the content shown in Table 1, thereby obtaining each of base compositions 1 to 3.

**[Table 1]**

| | Base composition 1 (mass%) | Base composition 2 (mass%) | Base composition 3 (mass%) |
|---|---|---|---|
| Soft UMA-1 | 31.2 | - | - |
| Hard UMA-1 | 14.6 | - | - |
| Soft UMA-2 | - | 31.2 | 31.2 |
| Hard UMA-2 | - | 14.6 | |
| Epoxy acrylate | - | - | 14.6 |
| THFMA | 6.4 | 6.4 | 6.4 |
| HEMA | 45.8 | 45.8 | 45.8 |
| HOA-MPL | 2 | 2 | 2 |

Details of abbreviations described in Table 1 are shown below.
Soft UMA-1: aromatic trifunctional urethane methacrylate having a structural unit based on tolylene diisocyanate (weight average molecular weight: 42,000, maximum value of tanδ: -34°C)
Hard UMA-1: aliphatic bifunctional urethane methacrylate having a structural unit based on trimethylhexamethylene diisocyanate (weight average molecular weight: 1,100, maximum value of tanδ: 125°C)
Soft UMA-2: alicyclic bifunctional urethane methacrylate having a structural unit based on isophorone diisocyanate (weight average molecular weight: 10,600, maximum value of tanδ: -10°C)
Hard UMA-2: alicyclic bifunctional urethane methacrylate having a structural unit based on isophorone diisocyanate (weight average molecular weight: 3,300, maximum value of tanδ: 50°C)
Epoxy acrylate: acrylic acid adduct of bisphenol A type epoxy resin (weight average molecular weight: 500 or more)
THFMA: tetrahydrofurfuryl methacrylate, LIGHT ESTER THF (1000), manufactured by Kyoeisha Chemical Co., Ltd.
HEMA: 2-hydroxyethyl methacrylate, manufactured by MITSUBISHI GAS CHEMICAL COMPANY, INC.
HOA-MPL: the following compound, manufactured by Kyoeisha Chemical Co., Ltd.

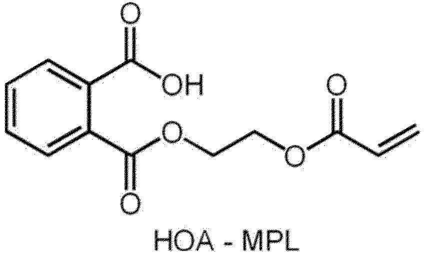

### (Examples 1 to 5 and Comparative Examples 1 and 2)

Each component described in Table 2 was mixed with a mixer at normal temperature (25°C) for 60 minutes so as to have the content described in Table 2, thereby obtaining each of anaerobic curing adhesive compositions of Examples 1 to 5 and Comparative Examples 1 and 2.

Table 3 shows the viscosity of each anaerobic curing adhesive composition at 25°C. The viscosity was measured by the method described above.

### <Evaluation of Oily Surface Adhesiveness and Adhesion Strength at High Temperature>

For various electromagnetic steel sheets described in Table 3, two sheets of the same type were used as one set, and 1 µL/cm² of AT Quicker CM (primer, manufactured by TOAGOSEI CO., LTD.) was applied to the tip of one steel sheet. Subsequently, various types of working oil described in Table 3 were applied and spread thereon at 2 µL/cm², and the working oil was similarly applied and spread on a steel sheet to which a primer was not applied at 2 µL/cm². Further, 0.1 g of the adhesive was dropped onto a steel sheet coated with only a working oil without applying a primer, and two steel sheets were immediately bonded together and compressed with two double clips. The above steps were performed within 20 seconds, and the bonding area was set to from 5 cm² to 6 cm². The obtained test piece was allowed to stand still at 25°C for from 12 hours to 24 hours.

For the test piece allowed to stand still, the clips were removed, and then the test piece was pulled at 10 mm/min. at room temperature or 150°C using Strograph 20-C manufactured by Toyo Seiki Seisaku-sho, Ltd., thereby measuring a tensile shear strength (MPa).

**[Table 2]**

| Unit of each component: mass% | Example 1 | Example 2 | Example 3 | Example 4 | Example 5 | Comparative Example 1 | Comparative Example 2 |
|---|---|---|---|---|---|---|---|
| Base composition 1 | 59.5 | 59.5 | - | - | - | 96.9 | - |
| Base composition 2 | - | - | 59.5 | - | - | - | - |
| Base composition 3 | - | - | - | 59.5 | - | - | - |
| Soft UMA-2 | - | - | - | - | 46.7 | - | - |
| Soft UMA-1 | - | - | - | - | - | - | 36.4 |
| Hard UMA-1 | - | - | - | - | - | - | 27.2 |
| HOA-MPL | - | - | - | - | 1.1 | - | - |
| HEMA | 26.5 | 26.5 | 26.5 | 26.5 | 38.2 | - | 29.2 |
| IBXMA | 5.45 | 5.45 | 5.45 | 5.45 | 5.45 | - | 4.8 |
| M-405 | 5.45 | - | 5.45 | 5.45 | 5.45 | - | - |
| M-450 | - | 5.45 | - | - | - | - | - |
| AA | 0.7 | 0.7 | 0.7 | 0.7 | 0.7 | 0.7 | - |
| Saccharin | 0.4 | 0.4 | 0.4 | 0.4 | 0.4 | 0.4 | 0.4 |
| EDTA-2Na | 0.01 | 0.01 | 0.01 | 0.01 | 0.01 | 0.01 | 0.01 |
| PERCUMYL H | 2 | 2 | 2 | 2 | 2 | 2 | 2 |

Details of abbreviations in Table 2 other than those described above are as follows.
IBXMA: isobomyl methacrylate, manufactured by Tokyo Chemical Industry Co., Ltd.
M-405: mixture of dipentaerythritol pentaacrylate and dipentaerythritol hexaacrylate, ARONIX (registered trademark) M-405 manufactured by TOAGOSEI CO., LTD.
M-450: pentaerythritol tetraacrylate, ARONIX (registered trademark) M-450 manufactured by TOAGOSEI CO., LTD.
AA: acrylic acid, manufactured by TOAGOSEI CO., LTD.
EDTA-2Na: ethylenediaminetetraacetic acid disodium salt, manufactured by FUJIFILM Wako Pure Chemical Corporation
PERCUMYL H: cumene hydroperoxide, manufactured by NOF CORPORATION

**[Table 3]**

| | Viscosity at 25°C (mPa·s) | Evaluation condition | Steel sheet | NIPPON STEEL P | | | NIPPON STEEL Cr | | | JFE 35JN300A | | | NIPPON STEEL 35H300L | | |
|---|---|---|---|---|---|---|---|---|---|---|---|---|---|---|---|
| | | | Oil | None | Daphne | G6339F | None | Daphne | G6339F | None | Daphne | G6339F | None | Daphne | G6339F |
| Example 1 | 160 | r.t. | | | 6.8 | - | - | 6.0 | - | - | - | - | - | 6.8 | - |
| | | 150°C | | | 2.3 | - | - | 2.1 | - | - | - | - | - | 1.2 | - |
| Example 2 | 160 | r.t. | | | 5.5 | - | - | 5.7 | - | - | - | - | - | - | - |
| | | 150°C | | | 1.6 | - | - | 1.7 | - | - | - | - | - | - | - |
| Example 3 | 100 | r.t. | | 6.8 | 6.2 | 6.2 | 5.5 | 6.1 | 6.6 | 5.1 | 4.2 | 2.7 | 6.1 | 6.6 | 6.5 |
| | | 150°C | | | 2.3 | - | - | 2.0 | - | - | - | - | 1.3 | 1.2 | 1.3 |
| Example 4 | 90 | r.t. | | | 7.0 | - | - | 6.7 | - | - | - | - | - | - | 7.1 |
| | | 150°C | | | 1.7 | - | - | 1.3 | - | - | - | - | - | - | 0.9 |
| Example 5 | 1,470 | r.t. | | | 6.9 | 6.7 | - | 6.5 | 6.0 | - | - | - | - | - | 6.4 |
| | | 150°C | | | 1.9 | 1.1 | - | 0.8 | 0.9 | - | - | - | - | - | 1.0 |
| Comparative Example 1 | 700 | r.t. | | | 5.2 | - | - | 5.0 | - | - | - | - | - | - | - |
| | | 150°C | | | 0.3 | - | - | 0 | - | - | - | - | - | - | - |
| Comparative Example 2 | 200 | r.t. | | | 5.9 | - | - | 1.3 | - | - | - | - | - | - | - |
| | | 150°C | | | 0 | - | - | 0.4 | - | - | - | - | - | - | - |

Details of abbreviations in Table 3 are as follows.

### <Steel Sheet>

NIPPON STEEL P: 0.30 mm in thickness, 7.65 kg/dm² in density, 30HX1600·G manufactured by NIPPON STEEL CORPORATION
NIPPON STEEL Cr: 0.30 mm in thickness, 7.65 kg/dm² in density, 30HX1600·L manufactured by NIPPON STEEL CORPORATION
JFE 35JN300A: non-oriented electromagnetic steel strip, 0.35 mm in thickness, 7.65 kg/dm² in density, JN Core 35JN300A manufactured by JFE Steel Co., Ltd.
NIPPON STEEL 35H300L: 0.35 mm in thickness, 7.65 kg/dm² in density, 35H300 L manufactured by NIPPON STEEL CORPORATION

### <Oil>

Daphne: Daphne New Punch Oil manufactured by Idemitsu Kosan Co., Ltd.
G-6339F: punching oil (mineral oil), manufactured by NIHON KOHSAKUYU CO., LTD.

As shown in Table 3, the anaerobic curing adhesive composition of the disclosure is excellent in oily surface adhesiveness and adhesion strength at a high temperature.

### INDUSTRIAL APPLICABILITY

The disclosure provides, for example, an anaerobic curing adhesive composition capable of obtaining a bonded laminated body that contributes to simplification of a process of a bonding lamination method and improvement in performance and reliability of a rotor and a stator of a motor, and thus is extremely effective, can be used in a wide range of products and technical fields, and is industrially useful.

The entire contents of the disclosures by Japanese Patent Application No. 2021-194894 filed on November 30, 2021 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

## Claims

1. An anaerobic curing adhesive composition, comprising:
a polymer or an oligomer, having two or more (meth)acryloyl groups in one molecule;
a polyfunctional ethylenically unsaturated compound other than the polymer or the oligomer;
a radical polymerization initiator; and
an anaerobic curing catalyst.

2. The anaerobic curing adhesive composition according to claim 1, wherein a total content of the polymer or the oligomer is from 30% by mass to 70% by mass with respect to a total mass of the adhesive composition.

3. The anaerobic curing adhesive composition according to claim 1, wherein a content of the polyfunctional ethylenically unsaturated compound other than the polymer or the oligomer is from 1% by mass to 20% by mass with respect to a total mass of the adhesive composition.

4. The anaerobic curing adhesive composition according to claim 1, wherein the radical polymerization initiator is an organic peroxide.

5. The anaerobic curing adhesive composition according to claim 1, further comprising a compound having an aromatic ring and an ethylenically unsaturated group.

6. The anaerobic curing adhesive composition according to claim 5, wherein the compound having an aromatic ring and an ethylenically unsaturated group includes a compound having only one ethylenically unsaturated group.

7. The anaerobic curing adhesive composition according to claim 5, wherein the compound having an aromatic ring and an ethylenically unsaturated group includes a compound having an oxycarbonyl group having an ethylenically unsaturated group on an aromatic ring.

8. The anaerobic curing adhesive composition according to claim 5, wherein the compound having an aromatic ring and an ethylenically unsaturated group includes a phthalic acid-modified compound having an ethylenically unsaturated group.

9. The anaerobic curing adhesive composition according to claim 8, wherein the phthalic acid-modified compound having an ethylenically unsaturated group includes mono(meth)acryloxy (poly)alkyleneoxyalkyl phthalate.

10. The anaerobic curing adhesive composition according to claim 1, which is an anaerobic curing adhesive composition for a steel sheet.

11. A bonded laminated body obtained by bonding and layering two or more steel sheets with the anaerobic curing adhesive composition according to any one of claims 1 to 10.

12. A motor comprising the bonded laminated body according to claim 11.
